# EUROPÄISCHE PATENTSCHRIFT

(11) **EP 0 484 763 B1**
(45) Veröffentlichungstag und Bekanntmachung des Hinweises auf die Patenterteilung: **04.01.1995**
(21) Anmeldenummer: 91118210.3
(22) Anmeldetag: 25.10.1991
(51) Int. Cl.: B29C 45/17, B29C 45/27

(54) **Verfahren und Vorrichtung zur Herstellung von Transportkästen, insbesondere Flaschenkästen**
Method and apparatus for making transport crates, in particular crates for bottles
Procédé et dispositif pour fabriquer des caisses de transport, notamment des caisses à bouteilles

(30) Priorität: 08.11.1990 DE 4035497
(43) Veröffentlichungstag der Anmeldung: 13.05.1992
(73) Patentinhaber: PEGUFORM-WERKE GMBH, 79268 Bötzingen (DE)
(72) Erfinder: Boison, Rainer, W-3418 Uslar 1 (DE)
(74) Vertreter: Blumbach, Kramer & Partner

(56) Entgegenhaltungen:
- EP-A- 0 298 631
- WO-A-90/05676
- DE-A- 2 734 746
- DE-U- 9 006 785
- NL-A- 8 903 105

## Beschreibung

Die Erfindung betrifft ein Verfahren und eine Vorrichtung zur Herstellung von Transportkästen, insbesondere Flaschenkästen, im Spritzgußverfahren unter Einspritzen von schmelzflüssigem Kunststoff an mehreren Punkten, vorzugsweise im Bodenbereich.

Übliche Transportkästen und hier wiederum Flaschenkästen werden schon seit langem in großen Stückzahlen im Spritzgußverfahren aus Kunststoff hergestellt. Dazu wird in eine zweiteilige Form unter hohem Druck Kunststoff meist von mehreren Anspritzstellen her im heißen, schmelzflüssigen Zustand eingepreßt und dann der Hohlraum zwischen den beiden Formhälften ausgefüllt. Nach ausreichendem Abkühlen fährt man die beiden Formteile auseinander und kann dann den fertigen Kasten entnehmen.

Bekannt ist seit einiger Zeit auch das Herstellen von Kunststoffteilen im Spritzgußverfahren, wobei zur Material- und Gewichtseinsparung Hohlräume im Spritzgußteil erzeugt werden. Dazu wird entweder nach dem Füllen der jeweiligen Form mit dem schmelzflüssigen Kunststoff Druckgas mittels einer oder mehrerer Injektionsnadeln an die entsprechenden Stellen in der Form eingepreßt, das dann Teile des Kunststoffes unter Erzeugung eines Hohlraums verdrängt. Hierzu wird beispielsweise verwiesen auf EP-A-283 207. Bei einem anderen Verfahren wird das Druckgas direkt in den Strom des in den Formhohlraum eingepreßten, schmelzflüssigen Kunststoffes eingeführt (EP-A-298 631).

Der vorliegenden Erfindung liegt nun die Aufgabe zugrunde, ein Verfahren und eine Vorrichtung zur Durchführung des Verfahrens verfügbar zu machen, mit dem bzw. mit der auf einfache und wirksame Weise bei Transportkästen und insbesondere Flaschenkästen großvolumige Querschnittsbereiche des Kastens, insbesondere im Bereich der Handgriffe und der Eckholme mit inneren Hohlräumen versehen werden können. Die Lösung der Aufgabe ist im Patentanspruch 1 gekennzeichnet.

Eine Vorrichtung zur Durchführung des Verfahrens sieht einen geheizten Einspritzkanalverteiler vor, der außer den normalen Einspritzdüsen für das Kunststoffmaterial Sonderdüsen aufweist, die in die großvolumigen Querschnittsbereiche des Kastens münden und Injektionsdüsen zur mittigen Einführung von Druckgas in den Kunststoffstrom aufweisen.

Zur Herstellung von Flaschenkästen sieht eine Weiterbildung der Erfindung vor, daß der Einspritzkanalverteiler kreuzförmig ausgebildet ist und an den Enden der Kreuzarme je eine Einspritzdüse im Bodenbereich des Flaschenkastens aufweist. Die Sonderdüsen sind dabei an den Enden der Kreuzarme seitlich abstehend so angeordnet, daß sie am Kastenrand je im Bodenbereich einer an jeder der vier Kastenseiten angeordneten Innenrippe münden, die senkrecht und auf einer Seite einer Eingriffsöffnung zu einem oberhalb der Eingriffsöffnung angeordneten Handgriff für den Kasten führen. Etwa im Zentrum der Innenrippen führt dann ein Druckgaskanal in den Bereich des Handgriffs und sorgt dort für einen inneren Hohlraum. Zusätzlich kann nach einer weiteren Empfehlung der Erfindung auch auf der anderen Seite der Eingriffsöffnungen jeweils eine weitere senkrechte Innenrippe vorgesehen sein, die vom Kastenboden zum Handgriff führt. Bei richtiger Verfahrensführung strömt dann das Druckgas im Inneren der weiteren Innenrippe wieder zurück in Richtung zum Kastenboden, so daß auch die weitere Innenrippe einen Hohlraum enthält. Die Entlüftung des Druckgases kann jeweils am Ende des Fließweges für das Druckgas erfolgen, also beispielsweise am unteren Ende der weiteren senkrechten Innenrippe.

Nachfolgend wird ein Ausführungsbeispiel der Erfindung anhand der Zeichnung beschrieben. Es zeigen:
- Fig. 1: die perspektivische Ansicht eines Flaschenkastens, der nach dem erfindungsgemäßen Verfahren und unter Verwendung einer entsprechenden Vorrichtung hergestellt worden ist;
- Fig. 2: eine Aufsicht des Einspritzkanalverteilers zur Herstellung des Kastens nach Fig. 1

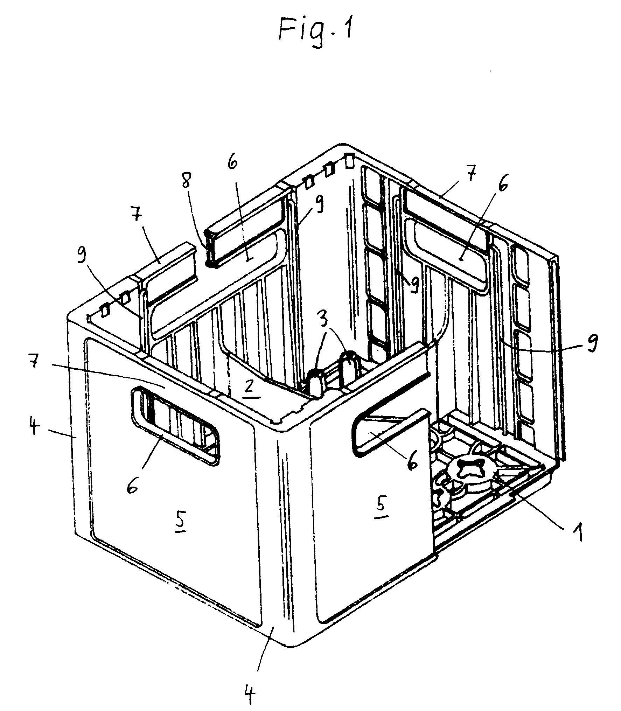

Der Flaschenkasten nach Fig. 1 besitzt in üblicher Weise einen nur teilweise sichtbaren, verrippten Boden 1 und ist mit Hilfe von zwei sich kreuzenden Innenwänden 2 in vier Fächer zur Aufnahme von je einem Sechser-Pack von Flaschen unterteilt. Zur Lagesicherung der später in den Kasten zurückgestellten, leeren Flaschen sind in bekannter Weise im Bereich zwischen je vier Flaschen hochragende Abstandshalter 3 auf dem Boden vorgesehen, von denen nur zwei sichtbar sind. Zur Versteifung und Lastübertragung im Stapel besitzt der Kasten in ebenfalls üblicher Weise Eckholme 4, die durch Wände 5 miteinander verbunden sind. Im oberen Bereich der Wände 5 sind Eingrifföffnungen 6 an allen vier Kastenseiten vorgesehen. Die Wandbereiche unterhalb der Eingrifföffnungen 6 werden auch als Werbeflächen bezeichnet, weil hier üblicherweise die jeweilige Brauerei und die Getränkeart angegeben ist. Oberhalb der Eingrifföffnungen 6 sind durch zusätzliche Rippen Handgriffe 7 ausgebildet, die wegen des verhältnismäßig großen Gewichtes eines gefüllten Kastens sowohl eine breite Auflagefläche für die Hand als auch verhältnismäßig hohe Festigkeit besitzen müssen. Trotzdem soll insgesamt der Kasten möglichst leicht bleiben, damit nicht unnötig viel totes Gewicht transportiert und außerdem möglichst Material eingespart wird.

Die hohle Ausbildung der Handgriffe 7 mit jeweils einem inneren Hohlraum 8 gelingt dadurch, daß jeweils beiderseits der Eingriffsöffnungen 7 innere Versteifungsrippen 9 vom Boden zum Handgriff 7 führen. Durch jeweils eine dieser Versteifungsrippen 9 strömt zusammen mit dem schmelzflüssigen Kunststoff Druckgas zum Handgriff 7 und bildet den inneren Hohlraum 8. Das Druckgas strömt dann weiter über die jeweils andere Innenrippe 9 in Richtung zum Boden und kann später dort durch Einstechen entspannt werden.

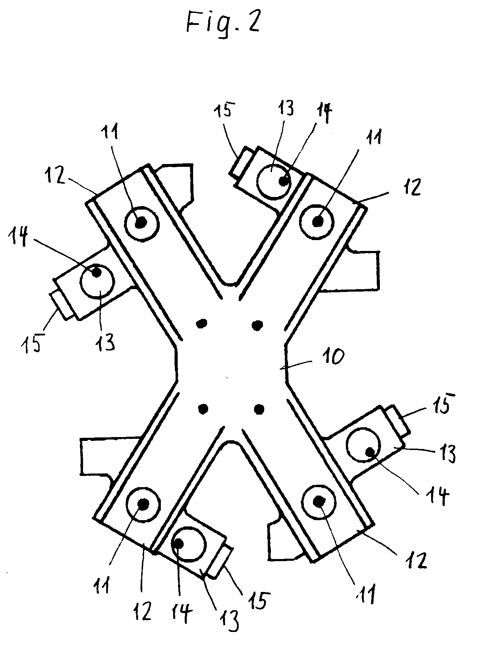

In Fig. 2 ist ein Einspritzkanalverteiler dargestellt, der zur Herstellung des Flaschenkastens gemäß Fig. 1 im Spritzgußverfahren dient. Der Verteiler 10 wird im Betrieb so geheizt, daß das unter hohem Druck im mittleren Bereich zugeführte Kunststoffmaterial schmelzflüssig bleibt. Es wird dann in an sich üblicher Weise an vier Anspritzpunkten 11, die an den Enden der Arme 12 des kreuzförmig ausgebildeten Verteilers 10 angeordnet sind, bodenseitig in die spritzgußform eingepreßt. Zusätzlich weist der Verteiler 10 an den Enden der Arme 12 seitlich angeordnete Sonderdüsen 13 auf, die jeweils zusätzliche Anspritzpunkte 14 besitzen. Den Sonderdüsen wird außerdem über Anschlüsse 15 ein Druckgas, vorzugsweise Stickstoff, zugeführt, das dann etwa im mittleren Bereich des aus den Anspritzpunkten 14 austretenden Kunststoffstrangs in die Form geleitet wird, und zwar jeweils am unteren Ende einer der Innenrippen 9 auf jeder Kastenseite. Auf diese Weise werden dann die inneren Hohlräume im Bereich der Innenrippen 9 und der Handgriffe 7 gebildet.

## Patentansprüche

1. Verfahren zur Herstellung von Transportkästen, insbesondere Flaschenkästen, im Spritzgußverfahren mit dem Verfahrensschritt:
a) Einspritzen von schmelzflüssigem Kunststoff an mehreren Punkten, vorzugsweise im Bodenbereich,
gekennzeichnet durch die Verfahrensschritte:
b) Einspritzen von schmelzflüssigem Kunststoff an weiteren Anspritzpunkten (14), die mit großvolumigen Querschnittsbereichen (7, 9) des Kastens, beispielsweise den Griff- und Eckholmbereichen, in Verbindung stehen,
c) zentrales Einführen von Druckgas in den Kunststoffstrom an den weiteren Anspritzpunkten,
d) Entlüften des Druckgases im zentralen Bereich der großvolumigen Querschnitte.

2. Verfahren nach Anspruch 1,
dadurch gekennzeichnet, daß das Entlüften des Druckgases am Ende des Fließweges erfolgt.

3. Vorrichtung zur Durchführung des Verfahrens nach Anspruch 1 oder 2,
gekennzeichnet durch einen geheizten Einspritzkanalverteiler (10), der neben den normalen Einspritzdüsen (11) für das Kunststoffmaterial Sonderdüsen (14) aufweist, die in die großvolumigen Querschnittsbereiche (9) des Kastens münden und Injektionsdüsen zur mittigen Einführung von Druckgas (15) in den Kunststoffstrom aufweisen.

4. Vorrichtung nach Anspruch 3,
dadurch gekennzeichnet, daß der Einspritzkanalverteiler (10) für einen Flaschenkasten kreuzförmig ausgebildet ist und an den Enden der Kreuzarme (12) je eine Einspritzdüse (11) im Bodenbereich des Flaschenkastens aufweist, und
daß die Sonderdüsen (13, 14) an den Enden der Kreuzarme (12) seitlich abstehend so angeordnet ist, daß sie am Kastenrand je im Bodenbereich einer an jeder der vier Kastenseiten angeordneten Innenrippe (9) münden, die senkrecht und auf einer Seite einer Eingriffsöffnung (6) zu einem oberhalb der Eingriffsöffnung angeordneten Handgriff (7) für den Kasten führen.

5. Vorrichtung nach Anspruch 4,
dadurch gekennzeichnet, daß auf der anderen Seite der Eingriffsöffnungen (6) jeweils eine weitere, senkrechte Innenrippe (9) vorgesehen ist, die vom Kastenboden zum Handgriff führt.

## Claims

1. A process for the production of transportation crates, more particularly bottle crates, by the injection moulding method comprising the following step:
a) injection of melted plastic at a number of points, preferably in the base area,
characterised by the following steps:
b) injection of melted plastic at additional injection points (14) connected to large-volume cross-sectional zones (7, 9) of the crate, e.g. the handle and corner member zones,
c) central introduction of compressed gas in the flow of plastic at the additional injection points,
d) venting of the compressed gas in the central zone of the large-volume cross-section.

2. A process according to claim 1, characterised in that the compressed gas is vented at the end of the flow path.

3. Apparatus for performing the process according to claim 1 or 2, characterised by a heated injection duct distributor (10) which in addition to the normal injection nozzles (11) for the plastic material has special nozzles (14) leading into the large-volume cross-sectional zones (9) of the crate and comprising injection nozzles for central introduction of compressed gas (15) into the stream of plastic.

4. Apparatus according to claim 3, characterised in that the injection duct distributor (10) is of cruciform shape for a bottle crate and has at the ends of each of the arms (12) of the cross an injection nozzle (11) in the base area of the bottle crate and in that the special nozzles (13, 14) are disposed to project laterally at the ends of the cross-arms (12) in such manner that they each lead at the edge of the crate to the base area of an inner rib (9) disposed at each of the four sides of the crate, such ribs extending vertically and on one side of a grip opening (6) to a handle (7) for the crate disposed above the grip opening.

5. Apparatus according to claim 4, characterised in that another vertical inner rib (9) is provided on each of the other sides of the grip openings (6), such additional ribs extending from the base of the crate to the handle.

## Revendications

1. Procédé de fabrication de caisses de transport, en particulier de caisses à bouteilles, selon un procédé de moulage par injection, comportant l'étape de procédé suivante :
a) injection de matière plastique liquéfiée par fusion en plusieurs points, de préférence dans la zone du fond,
caractérisé par les étapes de procédé :
b) injection de matière plastique liquéfiée par fusion en d'autres points d'injection (14), reliés à des zones à section transversale à grand volume (7, 9) de la caisse, par exemple les zones de poignée et de montants d'angle,
c) introduction centrale de gaz sous pression dans le courant de matière plastique destiné aux autres points d'injection,
d) désaération du gaz sous pression dans la zone centrale des sections transversales à grand volume.

2. Procédé selon la revendication 1, caractérisé en ce que la désaération du gaz sous pression s'effectue à la fin du cheminement du liquide.

3. Dispositif pour mettre en oeuvre le procédé selon la revendication 1 ou 2, caractérisé par un distributeur de canal d'injection (10) chauffé, présentant, outre les buses d'injection normales (11) destinée à la matière plastique, des buses spéciales (14), débouchant dans les zones de section transversale à grand volume (9) de la caisse et des buses d'injection destinées à l'introduction centrale de gaz sous pression (15) dans le courant de matière plastique.

4. Dispositif selon la revendication 3, caractérisé en ce que, s'agissant d'une caisse de bouteilles, le distributeur de canal d'injection (10) est réalisé en forme de croix et présente aux extrémités de chacun des bras de croix (12) une buse d'injection (11) située dans la zone de fond de la caisse de bouteilles, et en ce que les buses spéciales (13, 14) sont disposées, aux extrémités des bras de croix (12), en faisant saillie latéralement, de manière à déboucher sur le bord de caisse, chaque fois dans la zone de fond d'une nervure d'intérieure (9) disposée sur chacune des quatre faces de la caisse, menant verticalement et d'un côté d'une ouverture de saisie (6) à une poignée (7), destinée à la caisse et disposée au-dessus de l'ouverture de saisie.

5. Dispositif selon la revendication 4, caractérisé en ce qu'une autre nervure intérieure (9), menant du fond de la caisse à la poignée, est prévue de l'autre côté de chacune des ouvertures de saisie (6).
